Europäisches Patentamt

European Patent Office

Office européen des brevets

(11) Publication number: **0 146 941**
**B1**

(12) **EUROPEAN PATENT SPECIFICATION**

(45) Date of publication of patent specification: **05.09.90**

(51) Int. Cl.⁵: **H 04 N 9/04**

(21) Application number: **84115998.1**

(22) Date of filing: **20.12.84**

(54) Color Imaging apparatus.

(30) Priority: **21.12.83 JP 241365/83**

(43) Date of publication of application:
**03.07.85 Bulletin 85/27**

(45) Publication of the grant of the patent:
**05.09.90 Bulletin 90/36**

(84) Designated Contracting States:
**DE GB NL**

(56) References cited:
**IEEE TRANSACTIONS ON CONSUMER
ELECTRONICS, vol. CE-29, no. 3, August 1983,
pages 358-364, IEEE, New York, US; YOSHINORI
TAKIZAWA et al.: "Field integration mode CCD
color television camera using a frequency
interleaving method"**

(73) Proprietor: **KABUSHIKI KAISHA TOSHIBA
72, Horikawa-cho Saiwai-ku
Kawasaki-shi Kanagawa-ken 210 (JP)**

(72) Inventor: **Sato, Itsuzo c/o Patent Division
Kabushiki Kaisha Toshiba 1-1 Shibaura 1-chome
Minato-ku Tokyo 105 (JP)**

(74) Representative: **Blumbach Weser Bergen
Kramer Zwirner Hoffmann Patentanwälte
Radeckestrasse 43
D-8000 München 60 (DE)**

Courier Press, Leamington Spa, England.

## Description

The present invention relates to a color imaging apparatus using a solid-state image pickup device as, for example, an image pickup device for converting an optical signal to an electrical signal.

In conventional color imaging apparatuses, most of them use an image pickup tube (camera tube) as an image pickup device. However, recently, a color imaging apparatus using a solid-state image pickup device such as a CCD (charge coupled device) type image pickup device has been developed.

In the color imaging apparatus using a solid-state image pickup device, a photo sensitive section for storing charges responsive to the strength of light can be formed in each pixel. Due to this, as a color filter array which is arranged on the side of the incident light section of the image pickup device, it is possible to use arrays of various formats in which the kind and arrangement of color filters differ. Thus, thus makes it possible to use a new color filter array which could not be used in the color imaging apparatus employing the image pickup tube, so that it is possible to realize a new image pickup method which could not be realized by the color imaging apparatus using the image pickup tube.

When attention is paid to a method of taking out an electrical signal of a one-frame image as an image pickup method, in the color imaging apparatus using the solid-state image pickup device, not only the frame pickup method but also the field image pickup method can be easily realized. In the frame image pickup method, the electrical signal is produced from the photosensitive section at a frame period. In the field image pickup method, on the other hand, the electrical signal is produced from the photo sensitive section at a field period.

In addition, in the color imaging apparatus using the solid-state image pickup device, even when the number of pixels is small, an image with high resolution can be obtained by appropriately setting the kind and arrangement of color filters in the color filter array.

A color imaging apparatus according to the first portion of Claim 1 is disclosed in the document IEEE Transactions on Consumer Electronics, Vol. CE-29, No. 3, August 1983, pages 358—364. In this prior art the two separated chrominance signals are input into a first and a second processing amplifier, respectively, whose output signals in addition to the luminance signal are supplied to a color matrix circuit. The processing amplifiers are controlled by pulses from the synchron generator.

However, in the solid-state imaging apparatus using the solid-state image pickup device, the above-mentioned advantage is obtained, but there is, contrarily, a problem such that a color flicker at a frame frequency (30 Hz in an NTSC system) is likely to occur in the image. As the causes for occurrence of this color flicker, it is possible to mention, for instance, relative positional deviation between each color filter and the pixel corresponding thereto, variations in characteristics (transmittancy, spectral factor, etc.) of the color filters, and crosstalk of the stored charges between the pixels.

It is an object of the present invention to provide a color imaging apparatus which can prevent the occurrence of color flicker and the prevention of this color flicker can be realized by merely adding a simple circuit to the existing apparatus.

According to the invention, a novel color imaging apparatus is provided.

To accomplish the above object, the invention is constituted in a manner such that a level change for every field is eliminated by controlling the amplitude level of the separated output of a chrominance signal for every field.

This invention can be more fully understood from the following detailed description when taken in conjunction with the accompanying drawings, in which:

Fig. 1 is a circuit diagram showing an arrangement of one embodiment according to the present invention;

Fig. 2 is a diagram showing one example of a color filter array shown in Fig. 1;

Fig. 3 is a diagram showing the storage state of charges on the n-th horizontal scan line in the odd fields when the color filter array as shown in Fig. 2 is used;

Figs. 4 to 6 are diagrams showing the storage states of the charges shown in Fig. 3 with regard to the green light, red light and blue light, respectively;

Fig. 7 is a diagram showing the storage state of charges on the (n+1)th horizontal scan line in the odd fields when the color filter array as shown in Fig. 2 is used;

Figs. 8 to 10 are diagrams showing the storage states of the charges shown in Fig. 7 with regard to the green light, red light and blue light, respectively;

Figs. 11 to 13 are signal waveform diagrams for explaining the operation of a variable gain control circuit shown in Fig. 1;

Fig. 14 is a circuit diagram showing one example of a practical arrangement of the variable gain control circuit;

Fig. 15 is a signal waveform diagram showing another example of a gain control signal of the variable gain control circuit;

Fig. 16 is a diagram showing another example of the color filter array shown in Fig. 1;

Fig. 17 is a diagram showing the storage state of the charges on the n-th horizontal scan line in the odd field when the color filter array as shown in Fig. 16 is used;

Figs. 18 to 20 are diagrams showing the storage states of the charges shown in Fig. 17 with regard to the green light, red light and blue light, respectively;

Fig. 21 is a diagram showing the storage state of the charges on the (n+1)th horizontal scan line in the odd fields when the color filter array as shown in Fig. 16 is used;

Figs. 22 to 24 are diagrams showing the storage states of the charges shown in Fig. 21 with regard to the green light, red light and blue light, respectively; and

Fig. 25 is a circuit diagram showing an arrangement of a color imaging apparatus in case of using a color filter array shown in Fig. 16.

An embodiment of the present invention will now be described in detail hereinbelow with reference to the drawings.

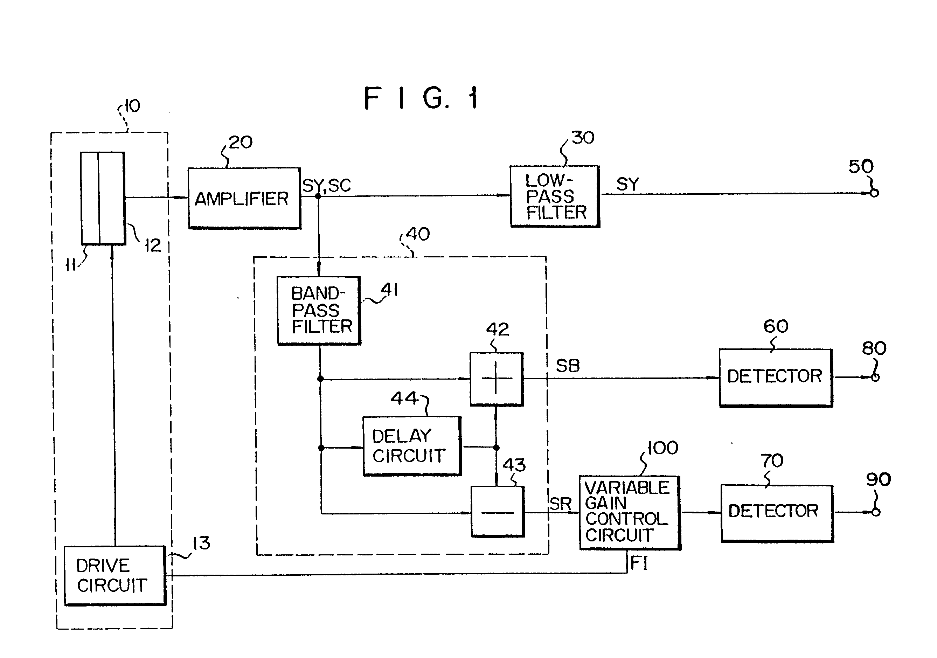

Fig. 1 is a circuit diagram showing an arrangement of a color imaging apparatus in one embodiment.

In the diagram, a reference numeral 10 denotes an image pick-up section. In this image pick-up section 10, a numeral 11 indicates a color filter array; 12 is a solid-state image pick-up device; and 13 is a drive circuit of this solid-state image pick-up device 12.

The color filter array 11 is an assembled part of color filters which are, for instance, provided for each pixel (picture element). The solid-state image pick-up device 12 is, for example, the CCD type image pick-up device. This solid-state image pick-up device 12 consists of a photo sensitive section array and a transfer section. The photo sensitive section array is an assembled part of photo sensitive sections which are provided in each pixel. Each photo sensitive section is formed by, e.g., a photo diode and stores charges responsive to the strength of the incident light. The transfer section consists of, for example, a transfer section in the horizontal direction and a transfer section in the vertical direction. Each transfer section is formed by a CCD.

The drive circuit 13 allows the charges stored in the photo sensitive section array to be transferred to the vertical transfer section and drives the horizontal and vertical transfer sections in accordance with the raster scan, thereby reading out the charges as the electrical signal from the solid-state image pick-up device 12.

That is, in the image pick-up section 10, a subject image formed on the photo sensitive section array as the result of that the light entered through the color filter array 11 is repeatedly horizontally scanned in a manner such that the vertical scan position is gradually shifted whenever the horizontal scan ends once, thereby fetching the image as an electrical signal.

The electrical signal which is obtained in this way is the mixed signal of a luminance signal SY and a chrominance signal SC. The chrominance signal SC consists of three signals of a red signal SR, a green signal SG and a blue signal SB. The red signal SR and blue signal SB among them are the modulated signals in which the signal having the frequency of one half of the charge transfer frequency in the horizontal transfer section is used as the carrier wave. In addition, the phase of the red signal SR is inverted for every horizontal scan line. On the other hand, the green signal SG is outputted not as the modulated signal but as the original signal (low frequency signal). The above points will be explained in detail later.

The above electrical signal is amplified by an amplifier 20 as necessary. An output signal of the amplifier 20 is divided into two signals and one of these signals is supplied to a low-pass filter 30 and the other is supplied to a chrominance signal separating section 40. The low-pass filter 30 extracts the luminance signal SY from the input signal and supplies it to an output terminal 50.

The chrominance signal separating section 40 has a band-pass filter 41. The band-pass filter 41 extracts the red signal SR and blue signal SB from the input signal. The mixed signal of the red signal SR and blue signal SB which is outputted from the band-pass filter 41 is supplied to an adder 42, a subtractor 43 and a delay circuit 44. The delay circuit 44 has a delay amount corresponding to one horizontal scan period (hereinafter, referred to as 1H).

The adder 42, subtractor 43 and delay circuit 44 form a comb filter. The comb filter receives an output signal from the band-pass filter 41 and delivers the red signal SR and blue signal SB as output signals. That is, since the phase of the red signal SR is inverted for every horizontal scan line, by adding, for example, the signal in the horizontal scan line which is being scanned at present (hereinbelow, referred to as the current horizontal scan line) which is outputted from the band-pass filter 41 and the signal in the horizontal scan line which was scanned 1H before (hereinafter, referred to as the previous horizontal scan line) which is outputted from the delay circuit 44 by the adder 42, the red signal SR is eliminated and the blue signal SB is obtained. On the contrary, the red signal SR is obtained from the subtractor 43.

The blue signal SB and red signal SR obtained in this way are respectively detected by detectors 60 and 70. Thus, the blue signal SB and red signal SR in the low frequency signal states are derived at terminals 80 and 90, respectively. These low frequency chrominance signals SB and SR are supplied together with the luminance signal SY which is obtained at the terminal 50 to a color encoder (not shown) and assembled into a color television signal.

The production of the chrominance signal SC in the image pick-up section 10 will then be explained.

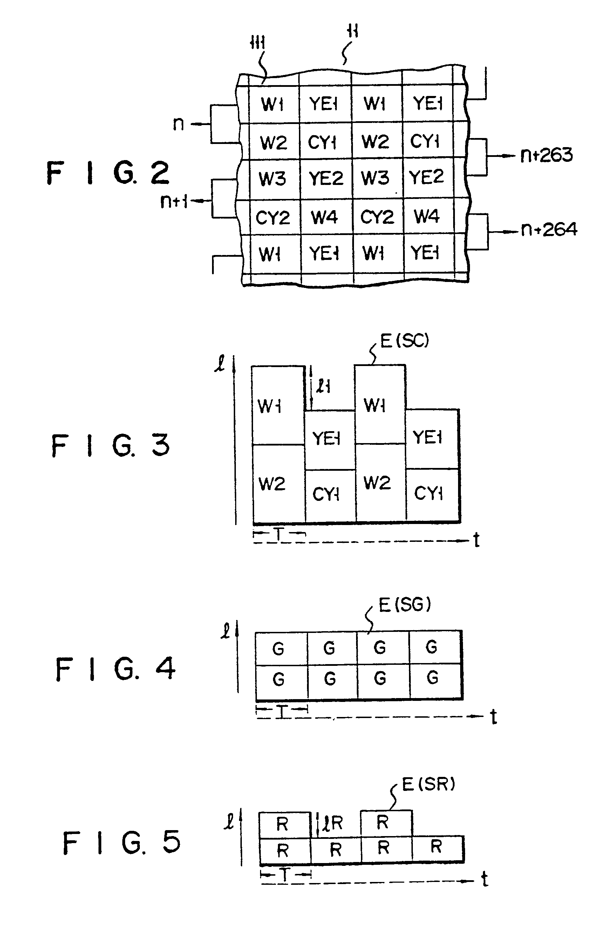

Fig. 2 is an enlarged diagram showing a part of the color filter array 11. In the diagram, color filters 111 indicated at W1 to W4 are transparent filters which transmit the red light R, green light G and blue light B. Color filters 111 indicated at YE1 and YE2 are filters for transmitting yellow and transmit the red light R and blue light B. Color filters 111 indicated at CY1 and CY2 are filters for transmitting cyan and transmit the green light G and blue light B.

Now, when considering the image pick-up in the NTSC system as a typical example, in Fig. 2, n denotes the n-th horizontal scan line (hereinbelow, referred to as the n line) in the odd fields OF and n+1 likewise indicates the (n+1)th horizontal scan line (hereinbelow, referred to as the (n+1) line). Also, n+263 represents the n-th horizontal scan line (hereinafter, referred to as the (n+263) line) in the even fields EF and n+264 similarly indicates the (n+1)th horizontal scan line (hereinafter, referred to as the (n+264) line).

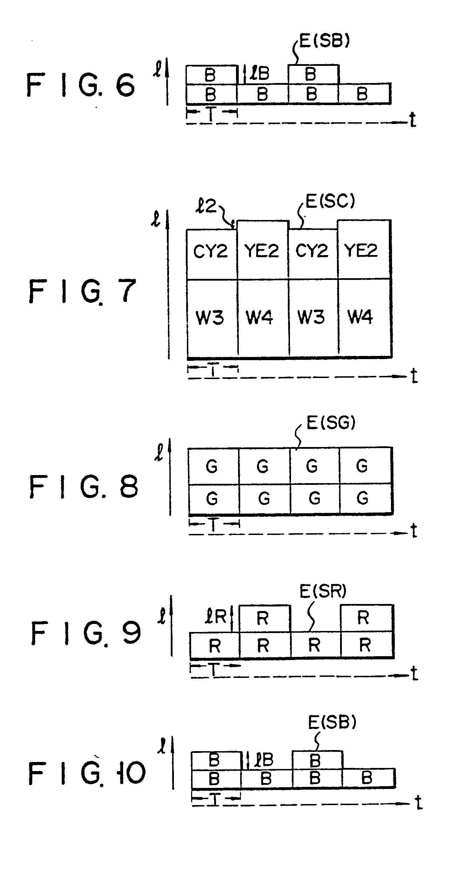

When the storage states of the charges on the n line are classified on a color filter unit basis, their charge storage states are as shown in Fig. 3. When the stored charges are divided with regard to each of the lights G, R and B, they are as shown in Figs. 4 to 6, respectively. Similarly, the storage states of the charges on the (n+1) line are as shown in Figs. 7 to 10.

In Figs. 3 to 10, an axis of ordinate indicates a storage level I of charges. Therefore, now assuming that an axis of abscissa represents a time t, an envelope E of the charge storage level I will indicate the chrominance signal which is outputted from the image pick-up section 10.

In the case where the color filter array 11 and horizontal scan lines are set as shown in Fig. 2, the red and blue signals SR and SB become the high frequency signals which were modulated using the carrier wave in which the period that is twice a horizontal transfer period T is used as one period as shown in Figs. 5, 9, 6, and 10. On the contrary, the green signal SG is fetched as the low frequency signal as shown in Figs. 4 and 8.

In addition, in the arrangement as shown in Fig. 2, the phase of the red signal SR is inverted for every horizontal scan line as will be obvious from the comparison between Figs. 5 and 9.

It will be appreciated from the above description that the red signal SR and blue signal SB are extracted from among the three chrominance signals SR, SG and SB by the band-pass filter 41 in the chrominance signal separating section 40. These two chrominance signals SR and SB are outputted in the states whereby they were separated by the foregoing comb filter. In this case, the respective chrominance signals SR and SB are obtained due to the addition and subtraction of the signals of two lines n and n+1, so that the amplitude levels of modulated signals become twice the amplitude levels IR and IB of modulated signals in one line.

When the amplitude levels 2IR and 2IB of the respective chrominance signals SR and SB which are obtained from the comb line filter are expressed using equations, they are as follows.

In the following equations, numerals W1 to W4 used in the explanation of Fig. 2 denote the amplitude levels of the signals of transparent colors, numerals YE1 and YE2 indicate the amplitude levels of the signals of yellow, and numerals CY1 and CY2 represent the amplitude levels of the signals of cyan.

$$2IB = \{(W1+W2)-(YE1+CY1)\} + \{(W3+CY2)-(YE2+W4)\} \tag{1}$$

$$= (W1+W3-YE1-YE2) + (W2-W4-CY1+CY2) \tag{2}$$

$$2IR = \{(W1+W2)-(YE1+CY1)\} - \{(W3+CY2)-(YE2+W4)\} \tag{3}$$

$$= (W2+W4-CY1-CY2) + (W1-W3-YE1+YE2) \tag{4}$$

The first term

$$\{(W1+W2)-(YE1+CY1)\}$$

in equations (1) and (3) indicates the amplitude level I1 in Fig. 3 and the second term

$$\{(W3+CY2)-(YE2+W4)\}$$

denotes the amplitude level I2 in Fig. 7.
The second terms

$$(W2-W4-CY1+CY2) \text{ and } (W1-W3-YE1+YE2)$$

in equations (2) and (4) are the values which will become zero if there are not the relative positional deviation between each of the above-mentioned color filters 111 and the corresponding pixel, variation in characteristics of each color filter 111, crosstalk of the stored charges between the respective pixels, etc. Therefore, in this case, the amplitude levels 2IB and 2IR become the normal values which are specified by the first terms

$$(W1+W3-YE1-YE2) \text{ and } (W2+W4-CY1-CY2)$$

in equations (2) and (4), respectively.

However, it is fairly difficult to eliminate the above-mentioned positional deviation, variation in characteristics, crosstalk, etc., so that the second terms in equations (2) and (4) become the error components of the amplitude levels 2IB and 2IR, respectively.

Although the above description relates to the odd fields OF, a similar processing is also performed with regard to the even fields EF. The amplitude levels 2IB and 2IR of the blue signal SB and red signal SR which are derived due to this processing will be as shown in the following equations, respectively.

$$2IB = \{(W2+W3)-(CY1+YE2)\} + \{(CY2+W1)-(W4+YE1)\} \tag{5}$$

$$= (W1+W3-YE1-YE2) + (W2-W4-CY1+CY2) \tag{6}$$

$$2IR = \{(W2+W3)-(CY1+YE2)\} - \{(CY2+W1)-(W4+YE1)\} \tag{7}$$

$$= (W2+W4-CY1-CY2) - (W1-W3-YE1+YE2) \tag{8}$$

The second terms in equations (6) and (8) are respectively the error components at the amplitude levels 2IR and 2IR similarly to the foregoing equations (2) and (4).

As will be apparent from equations (2) and (6), the signs (+ and −) of the error components of

the amplitude level 2IB are the same with regard to both odd fields OF and even fields EF. Therefore, the amplitude level 2IB of the blue signal SB is the same regarding both odd fields OF and even fields EF. Contrarily, the signs of the error components at the amplitude level 2IR are (+) in the odd fields OF and (−) in the even fields EF. Consequently, the amplitude level 2IR of the red signal SR varies depending upon the odd fields OF and even fields EF.

Such a phenomenon occurs even if filters for transmitting green are used in place of transparent filters W1 to W4.

The change of the amplitude level 2IR of the red signal SR in the odd fields OF and even fields EF causes the color flicker at 30 Hz in the image.

Therefore, in this invention, the occurrence of color flicker is prevented by controlling the amplitude level 2IR of the red signal SR which is outputted from the subtractor 43 for every field.

In the embodiment of Fig. 1, a variable gain control circuit 100 is inserted between the output terminal of the subtractor 43 and the input terminal of the detector 70. The variation in the amplitude level 2IR of the red signal SR which is inputted to the detector 70 is eliminated by changing the gain of the variable gain control circuit 100 with respect to the odd fields OF and even fields EF.

A field index signal FI is used as a signal to control the gain of the variable gain control circuit 100. This field index signal FI is the square wave at 30 Hz to discriminate the odd fields OF and even fields EF and is produced by the drive circuit 13. This drive circuit 13 has a reference signal generator and produces a pulse to drive the horizontal and vertical transfer sections in the solid-state image pick-up device on the basis of an output signal of this reference signal generator. At this time, the field index signal FI is produced for, for example, change-over of the scan of the odd fields OF and even fields EF.

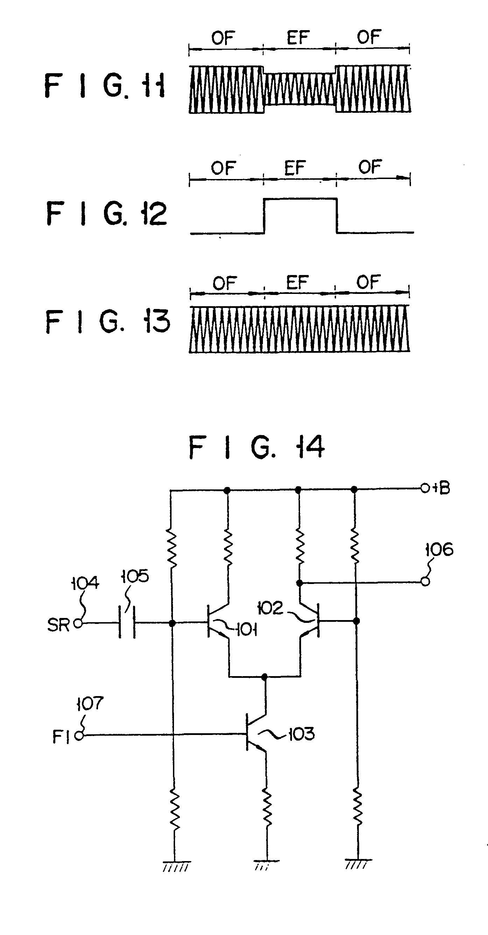

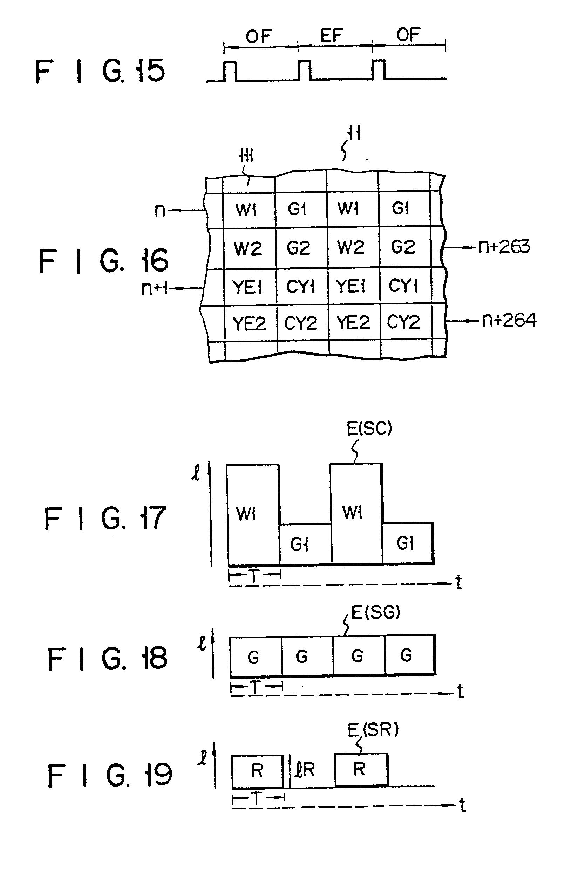

The gain control operation of the variable gain control circuit 100 will then be explained with reference to Figs. 11 and 13. Fig. 11 shows the red signal SR which is outputted from the subtractor 43. Fig. 12 shows the field index signal FI. Fig. 13 shows the red signal SR which is outputted from the variable gain control circuit 100. Also, Figs. 11 to 13 show the red signal output in the case where, for example, a white subject was imaged.

As shown in Fig. 12, the field index signal FI is the binary level signal of which the level is inverted for every field. Therefore, if the gain of the variable gain control circuit 100 is controlled in accordance with the amplitude level of the field index signal FI, different gains can be set with regard to the odd fields OF and even fields EF. Thus, if the set gains for the odd fields OF and even fields EF are preliminarily properly adjusted, the red signal SR in which the amplitude levels regarding the odd fields OF and even fields EF are equal can be obtained from the variable gain control circuit 100 as shown in Fig. 13, thereby enabling the occurrence of color flicker at 30 Hz to be prevented.

For instance, a differential amplifier as shown in Fig. 14 may be used as the variable gain control circuit 100.

In Fig. 14, numerals 101 and 102 denote transistors forming a differential pair and 103 indicates a transistor forming a constant current source for the transistors 101 and 102.

The operation of this circuit will now be explained. The red signal SR applied to an input terminal 104 from the subtractor 43 is supplied through a capacitor 105 to the base of the transistor 101. After this red signal was differentially amplified by the transistors 101 and 102, it is supplied to an output terminal 106 from the collector of the transistor 102 as the signal having the same phase as that of the red signal SR at the input terminal 104.

The field index signal FI is supplied to the base of the transistor 103 through an input terminal 107. Due to this, the collector current of the transistor 103 is controlled by the amplitude level of the field index signal FI. As will be obvious from the comparison between equations (4) and (8), the amplitude level of the red signal SR in the even fields EF is smaller than the amplitude level of the red signal SR in the odd fields OF. The amplitude level of the field index signal FI is set to a high level in the even fields EF and to a low level in the odd fields OF as shown in Fig. 12. With the field index signal at a low level, a gain in the differential amplifier is set to be equal to a reference gain. In this connection it is to be noted that the gain in the differential amplifier becomes greater than the reference gain when the field index signal FI is at a high level. By so doing, the red signal SR on the even field EF is amplified to a greater extent than the red signal SR on the odd field OF to permit the amplitude level of the red signal SR on the even field EF to be made equal to that of the red signal SR on the odd field OF.

On the other hand, with the field index signal FI at a high level, i.e., with the even field EF, the gain in the differential amplifier may be set to be equal to the reference gain. In this connection it is to be noted that the gain in the differential amplifier becomes lower than the reference gain with the field index signal at the lower level, i.e., with the odd field OF. In Fig. 14 (+B) denotes a power supply.

The invention is not limited to the foregoing embodiment.

For instance, as the gain control signal for the variable gain control circuit 100 which is applied from the drive circuit 13, it is not limited to the field index signal FI, but any signal synchronized with the change-over timing of the fields may be used irrespective of its waveform. For example, as shown in Fig. 15, pulses of a single polarity (pulses of the positive polarity in the diagram) which are generated synchronously with the same at which the change-over is made from odd field OF to even field EF may be used. Even in case of such pulses, for example, if a square wave at 30 Hz is obtained by providing a monostable multivibrator for the variable gain control circuit 100 and by driving this monostable multivibrator by the above pulses, such gain control as mentioned above can be performed.

Also, obviously, the variable gain control circuit 100 is not limited to the current control type differential amplifier. For instance, it is possible to use a circuit of an arrangement such that the gain is controlled by switching the load at the cycle of 60 Hz.

In addition to the purpose for prevention of occurrence of the color flicker, the variable gain control circuit 100 may be commonly used in an γ correction circuit which likewise uses a variable gain control circuit.

Also, the variable gain control circuit 100 may be arranged at the post stage of the detector 70, thereby controlling the amplitude level of the red signal SR in the state of the low frequency signal. In this connection, it is to be noted that, when the differential amplifier as shown in Fig. 14 is used as the variable gain control circuit 100, it is better to control the amplitude level 2IR of the red signal SR in the state of high frequency signal. Because, it is possible to reduce an interference of the gain control signal over the red signal due to the frequencies of the two signals being greatly separated from each other. Even if the amplitude level of the red signal SR is controlled by the differential amplifier in the state of low frequency signal, the interference of the gain control signal over the red signal SR can be made as small as possible through the use of a double balanced differential amplifier as the differential amplifier.

The level control means is not limited to the variable gain control circuit. For example, two circuits with different gains may be used such that they are switched in dependence upon the odd fields OF and even fields EF.

The change-over of the above two circuits with different gains and the change-over of the gains in the variable gain control circuit may be made of effecting an initialization by external synchronization. In this connection, it is to be noted that the synchronizing operation so initialized is subsequently carried out by an internal synchronization.

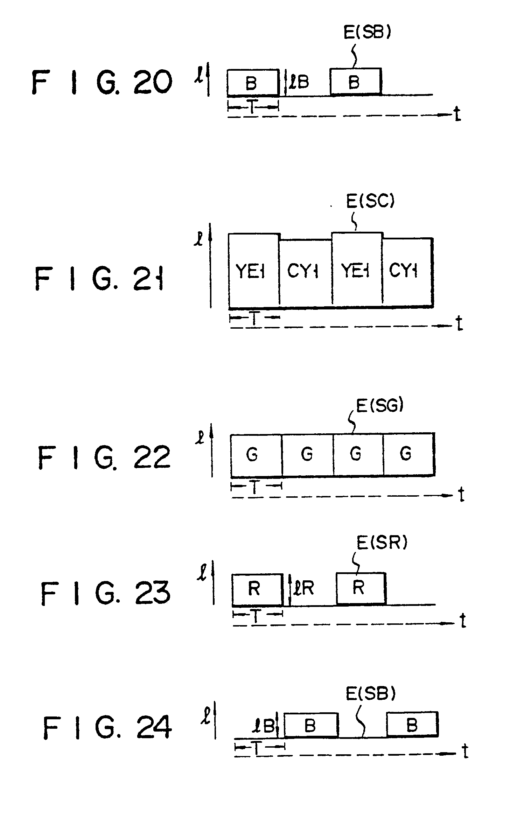

This invention may be also applied to a color imaging apparatus which permits light from the subject to be taken therein by means of a color filter array other than that shown in Fig. 2. In the diagram, color filters indicated at G1 and G2 are filters for transmitting the green light. The storage state of charges on the n line in this case is as shown in Fig. 17. On one hand, when the stored charges are classified with respect to each of the lights G, R and B, the storage states of the charges are as shown in Figs. 18 to 20, respectively. Likewise, the storage state of charges on the (n+1) line is as shown in Fig. 21 and the storage states of the charges regarding each of the lights R, G and B are as shown in Figs. 22 to 24, respectively.

In a color filter array 11 of the arrangement in Fig. 16, different from the color filter array 11 in Fig. 2, the chrominance signal whose phase is inverted for every horizontal scan line becomes the blue signal SB. Therefore, in this case, in Fig. 1, the red signal SR is outputted from the adder 42 and the blue signal SB is outputted from the subtractor 43.

The amplitude levels 2IR and 2IB of the red signal SR and blue signal SB in the odd fields OF are expressed by the following equations (9) and (10), respectively.

$$2IR = (W1 - G1) + (YE1 - CY1) \qquad (9)$$

$$2IB = (W1 - G1) - (YE1 - CY1) \qquad (10)$$

Similarly, the amplitude levels in the even fields EF are expressed by the following equations (10) and (11).

$$2IR = (W2 - G2) + (YE2 - CY2) \qquad (11)$$

$$2IB = (W2 - G2) - (YE2 - CY2) \qquad (12)$$

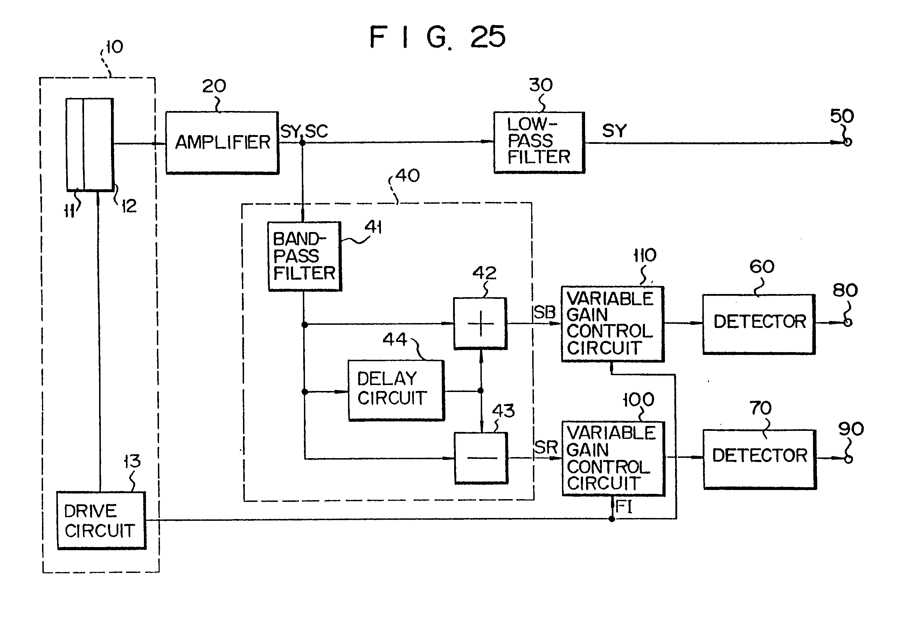

As will be obvious from equations (9) to (12), in the color filter array 11 in Fig. 16, the amplitude levels 2IR and 2IB of any of the red signal SR and blue signal SB are specified by the color filters 111 which quite differ with regard to the odd fields OF and even fields EF. That is, in case of any of the red signal SR and blue signal SB, the amplitude levels 2IR and 2IB are specified by the color filters 111 indicated at numerals W1, G1, YE1, and CY1 in the odd fields OF. On the contrary, in the even fields EF, they are specified by the color filters 111 which are indicated at numerals W2, G2, YE2, and CY2. This means that the amplitude levels 2IR and 2IB of both red signal SR and blue signal SB change in dependence upon the odd fields OF and even fields EF. Therefore, in this case, it is necessary to control the amplitude levels 2IR and 2IB of both red signal SR and blue signal SB for every field. This problem can be solved by providing a variable gain control circuit 110 also on the output side of the adder 42, for example, as shown in Fig. 25.

This invention can also be applied to a color imaging apparatus using the image pick-up tube.

As described above, according to the invention, since the amplitude level of a separated replica of the chrominance signal is controlled for every field, the occurrence of the color flicker at 30 Hz is suppressed to a minimum possible extent. Due to this, the image pick-up section can be easily manufactured and this can contribute much to an improvement in yield.

**Claims**

1. A color imaging apparatus comprising:
an image pickup section (10) for permitting a subject image which is formed on a photo sensitive section by a light incident through a color filter (111) to be converted to an electrical signal through a sequential, repetitive horizontal scanning which is performed in a vertical direction;

chrominance signal separating means (40) for additively and subtractively combining the electrical signals on the two adjacent horizontal scan lines which are output from the image pickup section (10) and for outputting two predetermined chrominance signals in the separated state, characterized by further comprising level control means (100, 110) for controlling one or both amplitude levels of said chrominance signals which are outputted from said chrominance signal separating means (40) for every field.

2. A color imaging apparatus according to Claim 1, characterized in that said level control means (100, 110) is a variable gain control circuit.

3. A color imaging apparatus according to Claim 1, characterized in that said level control means (100, 110) is a variable gain control circuit, and a gain of said variable gain control circuit is controlled in response to a signal synchronized with the change-over timing of odd fields and even fields which are produced in said image pickup section (10).

4. A color imaging apparatus according to Claim 1, characterized in that said level control means (100, 110) controls the amplitude level of the chrominance signal which is outputted from said chrominance signal separating means (40) in the state whereby the chrominance signal is the high frequency signal.

**Patentansprüche**

1. Farbbildaufnahmegerät, umfassend
einen Bildaufnahmeabschnitt (10) zur Umwandlung eines Objektbildes, das von durch ein Farbfilter (111) auf einen lichtempfindlichen Abschnitt fallendem Licht gebildet wird, in ein elektrisches Signal, durch eine sequentielle, wiederholte Horizontalabtastung, die in einer Vertikalrichtung ausgeführt wird,

eine Chrominanzsignalabtrenneinrichtung (40) zur additiven und subtraktiven Kombination der elektrischen Signale von zwei benachtbarten horizontalen Abtastzeilen, die von dem Bildaufnahmeabschnitt (10) ausgegeben werden, und zur Ausgabe zweier vorbestimmter Chrominanzsignale in getrenntem Zustand,

gekennzeichnet durch eine Pegelsteuereinrichtung (100, 110) zur Steuerung des Pegels der Amplitude eines oder beider Chrominanzsignale, die von der Chrominanzsignalabtrenneinrichtung (40) für jedes Teilbild ausgegeben werden.

2. Farbbildaufnahmegerät nach Anspruch 1, dadurch gekennzeichnet, daß die Pegelsteuereinrichtung (100, 110) eine Steuerschaltung mit variabler Verstärkung ist.

3. Farbbildaufnahmegerät nach Anspruch 1, dadurch gekennzeichnet, daß die Pegelsteuereinrichtung (100, 110) eine Steuerschaltung mit variabler Verstärkung ist, deren Verstärkung als Antwort auf ein Signal gesteuert wird, das mit dem Umschaltzeitpunkt von ungeraden und geraden Teilbildern synchronisiert ist, welche von dem Bildaufnahmeabschnitt (10) erzeugt werden.

4. Farbbildaufnahmegerät nach Anspruch 1, dadurch gekennzeichnet, daß die Pegelsteuereinrichtung (100, 110) den Amplitudenpegel des Chrominanzsignals steuert, das von der Chrominanzsignalabtrenneinrichtung (40) im Zustand eines Hochfrequenzsignals ausgegeben wird.

**Revendications**

1. Appareil de formation d'image en couleur, comprenant:
une section de prise de vue (10) destinée à permettre qu'une image, qui est formée sur une section photosensible par une lumière arrivant au travers d'un filtre de couleur (111), soit convertie en un signal électrique par l'intermédiaire d'un balayage horizontal séquentiel répétitif qui est effectué suivant la direction verticale;

un moyen (40) de séparation de signaux de chrominance servant à combiner par addition et soustraction les signaux électriques de deux lignes de balayage horizontal adjacentes qui sont délivrés par la section de prise de vue (10) et à délivrer deux signaux de chrominance prédéterminés dans l'état séparé,

caractérisé en ce qu'il comprend en outre un moyen de commande de niveau (100, 110) servant à commander un niveau ou les deux niveaux d'amplitude desdits signaux de chrominance qui sont délivrés par ledit moyen (40) de séparation de signaux de chrominance pour chaque trame.

2. Appareil de formation d'image en couleur selon la revendication 1, caractérisé en ce que ledit moyen de commande de niveau (100, 110) est un circuit de commande de gain variable.

3. Appareil de formation d'image en couleur selon la revendication 1, caractérisé en ce que ledit moyen de commande de niveau (100, 110) est un circuit de commande de gain variable, et le gain dudit circuit de commande de gain variable est commandé en réponse à un signal synchronisé avec le rythme de commutation des trames impaires et des trames paires qui sont produites dans ladite section de prise de vue (10).

4. Appareil de formation d'image en couleur selon la revendication 1, caractérisé en ce que ledit moyen de commande de niveau (100, 110) commande le niveau d'amplitude du signal de chrominance qui est délivré par ledit moyen (40) de séparation de signaux de chrominance dans l'état par lequel le signal de chrominance est le signal de haute fréquence.

# F I G. 1

EP 0 146 941 B1

F I G. 2

|  | IH |  | H |  |
|---|---|---|---|---|
| n → | W1 | YE1 | W1 | YE1 |
|  | W2 | CY1 | W2 | CY1 | ← n+263 |
| n+1 → | W3 | YE2 | W3 | YE2 |
|  | CY2 | W4 | CY2 | W4 | ← n+264 |
|  | W1 | YE1 | W1 | YE1 |

F I G. 3

E(SC)

| W1 | | W1 | |
| ℓ1 | | | |
| | YE1 | | YE1 |
| W2 | CY1 | W2 | CY1 |

├ T ┤ — — — — — — t

F I G. 4

E(SG)

| G | G | G | G |
| G | G | G | G |

├ T ┤ — — — — — t

F I G. 5

E(SR)

| R | ℓR | R | |
| R | R | R | R |

├ T ┤ — — — — — t

FIG. 6

FIG. 7

FIG. 8

FIG. 9

FIG. 10

F I G. 11

OF | EF | OF

F I G. 12

OF | EF | OF

F I G. 13

OF | EF | OF

F I G. 14

+B

106

104 105

SR

101

102

FI

107

103

4

F I G. 15

F I G. 16

F I G. 17

F I G. 18

F I G. 19

F I G. 20

F I G. 21

F I G. 22

F I G. 23

F I G. 24

F I G. 25